# DEMANDE DE BREVET EUROPEEN

(11) **EP 1 777 553 A1**
(43) Date de publication de la demande: **25.04.2007**
(21) Numéro de dépôt: 06122579.3
(22) Date de dépôt: 19.10.2006
(51) Int. Cl.: G01V 9/00, G01F 1/704

(54) **Procédé de mesure de la dynamique sédimentaire d'un site, utilisant un traceur artificiel activable**

(30) Priorité: 19.10.2005 FR 0553176
(71) Demandeur: Commissariat à l'Energie Atomique, 75015 Paris (FR)
(72) Inventeur: Brisset, Patrick, 91140, VILLEBON-SUR-YVETTE (FR); Vabre, Alexandre, 91470, LES MOLYERES (FR)
(74) Mandataire: Poulin, Gérard

(57) **Abrégé**

Procédé de mesure de la dynamique sédimentaire d'un site, utilisant un traceur artificiel activable.

Selon ce procédé, on prépare une matrice représentative des sédiments à étudier dans laquelle on introduit un traceur artificiel activable (2), on introduit cette matrice contenant letraceur artificiel activable (2) dans le milieu aquatique constitué par le site (S), on prélève au moins un échantillon (4) de ce milieu, dans au moins un emplacement (P) éloigné de celui (I) en lequel on a introduit le traceur, on effectue un dosage de la teneur en ce traceur dans l'étantillon par activation neutronique ou photonique ou par une méthode physico-chimique ou physique, on déduit du dosage la concentration en traceur de l'échantillon et on déduit de l'ensemble des échantillons prélevés au moins un paramètre de transfert du sédiment contenu dans le site. L'invention s'applique notamment à la mesure du transport sédimentaire dans une zone littorale ou fluviale.

## Description

### DOMAINE TECHNIQUE

La présente invention concerne un procédé de mesure de la dynamique sédimentaire d'un site.

Elle s'applique notamment
- à la mesure du transport sédimentaire dans les zones littorales, les estuaires, les fleuves, les rivières et les retenues des barrages,
- à l'étude des rejets de produits de dragage,
- au contrôle des constructions en milieu aquatique ou portuaire, et
- au contrôle de rénovation des plages.

On précise que les sédiments concernés par le procédé objet de l'invention sont essentiellement les sables (sédiments siliceux de taille supérieure à 40 µm) et les vases (sédiments pélitiques de taille généralement inférieure à 63 µm).

### ÉTAT DE LA TECHNIQUE ANTÉRIEURE

On connaît déjà un procédé de mesure de la dynamique sédimentaire d'un site. Ce procédé connu utilise un traceur radioactif : le sédiment à étudier est soit simulé (cas des sables) soit marqué chimiquement (cas des vases) par un radioélément que l'on injecte dans le milieu à étudier.

Les mesures de la radioactivité du sédiment, en des emplacements éloignés de celui en lequel on a introduit le traceur, ont lieu soit directement en ces emplacements, au moyen d'un détecteur de radioactivité, soit sur des échantillons que l'on rapporte dans un laboratoire.

Ce procédé connu est très performant en ce qui concerne la sensibilité. Il présente toutefois deux inconvénients majeurs, liés à l'emploi d'un matériau radioactif dans l'environnement.

Le premier de ces inconvénients est la nécessité d'obtenir une autorisation d'expérimentation auprès de l'Autorité de Sûreté Nucléaire du pays où ont lieu les mesures.

Le deuxième inconvénient réside dans la sensibilité croissante des populations vis-à-vis de l'utilisation de radioéléments dans l'environnement, sensibilité qui a conduit à l'interdiction de mettre en oeuvre ce procédé connu dans certains pays (Allemagne, Italie, Pays-Bas) et à la restriction de son emploi dans la plupart des autres pays.

Un autre procédé connu, semblable au précédent, est fondé sur l'emploi d'un traceur fluorescent. Cet autre procédé ne s'applique que dans le cas des sables, généralement pour des études portant sur des estrans, c'est-à-dire des portions de littoral qui sont recouvertes par la mer à marée haute et découvertes à marée basse.

Selon cet autre procédé connu, le sable naturel est recouvert d'une peinture qui est fluorescente lorsqu'elle est éclairée par un rayonnement ultraviolet. Les mesures de fluorescence ont lieu soit directement aux emplacements prévus, de nuit, soit sur des prélèvements, dans un laboratoire approprié, en éclairant le sable par un rayonnement ultraviolet et en comptant le nombre de grains de sable fluorescents.

Cet autre procédé n'a pas les inconvénients réglementaires ou sociologiques du procédé qui utilise un traceur radioactif mais sa sensibilité est faible et son usage est limité à certaines zones particulières, en général des estrans.

On connaît en outre un procédé de mesure du transport de sédiments par le document suivant :
(1) Demande de brevet internationale WO 94/09372, « Method and apparatus for tracing fluid-borne particles », invention de J.K. Marsh.

Selon ce procédé, on introduit un traceur artificiel, sous la forme de particules de polystyrène, de polyéthylène ou de polypropylène, dans un milieu contenant les sédiments ; et l'on dose la teneur en traceur dans un échantillon du milieu, prélevé dans une zone éloignée de celle en laquelle on a introduit le traceur.

Pour effectuer ce dosage, on excite les particules de traceur contenues dans l'échantillon par un rayonnement laser et l'on détecte le rayonnement de photoluminescence ou de fluorescence optique émis par les particules lors de cette excitation.

La technique de dosage, qui est utilisée dans ce procédé connu, est une méthode fondée sur la luminescence optique induite. Certes, une telle méthode permet d'analyser des échantillons de masses importantes et ne nécessite aucune préparation de ces échantillons. Mais cette méthode présente l'inconvénient d'être peu sensible.

La publication (3) par De Groot et al., « Cobalt and tantalum tracers measured by activation analysis in sédiment transport studies », Isotope hydrology, Proc. Symp. 1970, décrit un procédé d'analyse dans lequel on marque chimiquement des vases (en anglais, *muds)* au moyen d'un traceur qui est soit du Cobalt soit du Tantale ; les vases ainsi marquées sont introduites dans le milieu aquatique, et l'on prélève des échantillons qui sont ensuite mesurés par activation neutronique dans un réacteur nucléaire.

Ce procédé ne permet pas de mesurer la dynamique pour des sédiments du genre des sables pour deux raisons : premièrement, le marquage chimique de sables n'est pas efficace ; les sables étant généralement inertes vis-à-vis des traceurs, ceux-ci ne s'y adsorbent pas chimiquement ; deuxièmement, l'analyse par activation neutronique dans unréacteur nucléaire est limitée à des échantillons de petite taille (100 mg) ; elle est donc limitée à un petit nombre de grains de sables, qui ne sont pas représentatifs de la dynamique sédimentaire du milieu.

Même pour la mesure de sédiments du genre desvases, l'analyse par activation neutronique dans unréacteur nucléaire reste limitée à de petits échantillons prélevés. La préparation de ces échantillons pour l'analyse pas activation neutronique dans unréacteur nucléaire est minutieuse, et ne garantit pas une bonne représentativité des résultats.

### EXPOSÉ DE L'INVENTION

La présente invention a pour but de remédier àces inconvénients, en proposant un procédé beaucoup plus sensible pour mesurer le transport de sédiments.

De plus, le procédé objet de l'invention est au moins aussi précis et fiable que le procédé qui utilise un traceur radioactif, tout en n'ayant pas les contraintes sécuritaires de ce procédé.

De façon précise, la présente invention a pour objet un procédé de mesure de la dynamique sédimentaire dans un site constituant un milieu aquatique, ce milieu aquatique contenant au moins un sédiment, ce procédé étant caractérisé en ce qu'il comprend les étapes suivantes :
- on prépare une matrice représentative des sédiments à étudier dans laquelle on introduit un traceur artificiel activable,
- on introduit cette matrice représentative contenant letraceur artificiel activable dans le milieu aquatique,
- on prélève au moins un échantillon de ce milieu aquatique dans au moins un emplacement éloigné de celui en lequel on a introduit le traceur artificiel activable, à au moins un instant,
- on effectue un dosage de la teneur en ce traceur artificiel activable dans l'étantillon prélevé, par une méthode choisie parmi l'analyse par spectrométrie gamma de l'activité induite par activation neutronique ou par photo-activation et les méthodes physico-chimiques ou physiques de dosage,
- on déduit du dosage la concentration en traceur de l'échantillon analysé, et
- on déduit de l'ensemble des échantillons prélevés en fonction du temps et de l'espace au moins un paramètre de transfert du sédiment.

La matrice représentative des sédiments à étudier peut être naturelle, c'est-à-dire fabriquée à partir de sédiments naturellement présents dans le milieu (notamment pour la mesure de la dynamique sédimentaire des vases), ou synthétique, c'est-à-dire fabriquée à partir de matériaux synthétiques (verre, ciment, résine) dont la densité et la granulométrie sont proches de celles des sables.

On précise que par « traceur activable », on entend tout traceur dosable selon l'une des méthodes employées, à savoir l'activation neutronique par un générateur de neutrons D-T, l'activation photonique ou photo-activation, les méthodes physico-chimiques et les méthodes physiques telles que la fluorescence X et l'ablation laser.

De plus, par « activation neutronique » (respectivement « photonique »), on entend le fait d'induire de la radioactivité dans un matériau soumis à des neutrons (respectivement des photons), c'est-à-dire de produire un certain nombre de désintégrations nucléaires dans la matière, à savoir le traceur activable qui est stable s'il n'est pas soumis à un rayonnement neutronique ou photonique d'énergie suffisante.

Remarquons en outre que la technique connue, décrite dans le document (1), utilise une photoluminescence ou une fluorescence qui est induite par un laser ayant une certaine longueur d'onde.

On irradie ainsi optiquement un matériau pour induire un rayonnement ayant une autre longueur d'onde. Mais une telle réaction n'induit aucune radioactivité.

Le traceur utilisé dans cette technique connue n'est donc pas un traceur activable selon l'une des méthodes que l'on utilise dans la présente invention. De plus, selon cette technique, une mesure s'effectue en phase liquide et non pas en phase solide comme dans la présente invention.

Selon un premier mode de réalisation particulier du procédé objet de l'invention, le sédiment est un sable, on simule ce sable par une matrice, ou liant, à base de verre, de ciment ou de résine, dont la granulométrie et la densité sont équivalentes à celles du sable, on mélange le traceur artificiel activable sous forme de poudre à cette matrice, ou liant, et l'on introduit le mélange ainsi obtenu dans le milieu aquatique.

Selon un deuxième mode de réalisation particulier, le sédiment est une vase et l'on marque chimiquement cette vase par réaction chimique avec une solution contenant le traceur artificiel activable, pour introduire une matrice comprenant la vase marquée chimiquement par le traceur dans le milieu aquatique.

Selon un mode de réalisation particulier de l'invention, on sèche puis on tamise l'échantillon prélevé avant d'effectuer le dosage.

Selon un autre mode de réalisation particulier de l'invention, avant le dosage de l'échantillon, on concentre cet échantillon par élimination d'une matrice dans laquelle on a incorporé le traceur activable.

Selon un autre mode de réalisation particulier de l'invention, on extrait le traceur artificiel activable de l'échantillon prélevé avant d'effectuer le dosage.

Les méthodes physico-chimiques de dosage sont de préférence choisies parmi la spectrométrie de masse, l'absorption atomique et les méthodes électro-chimiques.

Le traceur activable est choisi parmi les éléments du tableau de Mendeleiev, en respectant les critères suivants :
- absence sur le site d'étude (ou présence en très faible teneur, c'est-à-dire au niveau de la limite de détection de la technique de dosage),
- limite de détection la plus faible possible pour la méthode de dosage choisie (ou bien choix de la méthode de dosage la plus sensible pour l'élément choisi).

A titred' exemples, on peut citer commetraceurs activables l'iridium pour une activation neutronique, et le zirconium oule cobalt pour une photo-activation.

Ainsi, selon un mode de réalisation préféré du procédé objet de l'invention, le traceur artificiel activable est choisi, après analyse des éléments présents naturellement à l'état de traces sur le site, soit comme élément non présent naturellement en quantité détectable, soit comme élément présent en quantité suffisamment faible pour que, après introduction, sa contribution dans l'échantillon puisse ressortir suffisamment du bruit de fond naturel.

Les méthodes physiques de dosage sont de préférence choisies parmi la fluorescence X et l'ablation laser.

L'invention concerne aussi un procédé de traçage de sédiments pour la mesure, en milieu aquatique, d'un transport sédimentaire, d'un dépôt ou d'un mouvement de sédiments, d'un transport par charriage, ou de rejets de produits de dragage, dans lequel on mesure la dynamique sédimentaire par le procédé objet de l'invention.

L'invention concerne en outre un procédé de contrôle de constructions en milieu aquatique, d'installations portuaires, de chenaux de navigation, de rénovation de plages, ou de remblais en mer, dans lequel on mesure la dynamique sédimentaire par le procédé objet de l'invention.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement un exemple du procédé objet de l'invention,
- la figure 2 illustre schématiquement un prélèvement d'échantillons en milieu aquatique, que l'on peut mettre en oeuvre dans la présente invention.
- la figure 3 illustre schématiquement un exemple de mesure de dynamique sédimentaire en fonction du temps et de l'espace,
- la figure 4 illustre schématiquement le principe de l'activation neutronique, et
- la figure 5 illustre schématiquement le principe de l'activation photonique.

### EXPOSÉ DÉTAILLÉ DE MODES DE RÉALISATION PARTICULIERS

On donne ci-après des exemples du procédé objet de l'invention.

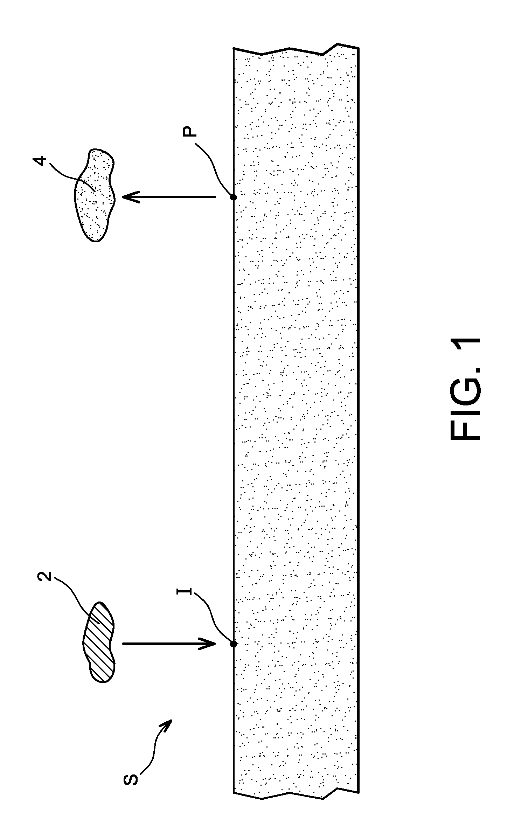

On souhaite mesurer la dynamique sédimentaire d'un site S (figure 1) constituant un milieu aquatique, par exemple un fleuve ou un milieu marin littoral. Ce milieu aquatique contient un sédiment tel que du sable ou de la vase et l'on veut mesurer un ou plusieurs paramètres relatifs au transfert du sédiment (par exemple la direction du transfert, la vitesse moyenne de transfert, l'épaisseur de la couche de sédiment qui se déplace, la quantité de sédiment transportée par unité de temps).

Pour ce faire, conformément à l'invention, on prépare une matrice représentative des sédiments à étudier dans laquelle on introduit un traceur artificiel activable 2, et l'on introduit cette matrice représentative contenant le traceur artificiel activable dans le site considéré, on prélève un ou plusieurs échantillons 4 du milieu aquatique, en un ou plusieurs emplacements P éloignés de celui (référence I) en lequel on a introduit la matrice représentative contenant le à un ou plusieurs instants en fonction du temps. Chaque échantillon prélevé contient une quantité plus ou moins importante du traceur.

On dose alors la teneur en traceur dans les échantillons prélevés par une méthode choisie parmi
- l'analyse par spectrométrie gamma de l'activité induite par activation neutronique ou photonique (plus simplement appelée analyse par activation neutronique ou photonique) et
- les méthodes physico-chimiques ou physiques de dosage.

On reviendra sur ces méthodes par la suite.

Les dosages ainsi effectués permettent de déterminer la concentration en traceur des échantillons analysés. On déduit ensuite de l'ensemble des échantillons prélevés en fonction du temps et de l'espace les paramètres de transfert.

A titre purement indicatif et nullement limitatif, on donne ci-après le logigramme d'un procédé de mesure de dynamique sédimentaire conforme à l'invention :
1. prélèvement d'échantillons de sédiments pour déterminer la concentration en élément traceur
2. choix et fabrication d'une matrice ayant les mêmes propriétés (granulométrie et densité) que les sédiments et incorporation de l'élément traceur activable dans cette matrice
3. introduction de la matrice contenant le traceur dans le milieu aquatique à étudier
4. prélèvement d'échantillons à différents endroits et/ou différents instants
5. mesure de la concentration en élément traceur dans l'échantillon ou les échantillons
6. déduction des paramètres de transfert sédimentaire.

Donnons quelques précisions sur le prélèvement des échantillons. Ce prélèvement peut être effectué en divers points d'un maillage pré-établi d'une zone s'étendant autour du point d'introduction de la matrice contenant le traceur.

Cette zone peut par exemple s'étendre dans un rayon de 3km à 300km autour du point d'introduction. Cela dépend du sédiment étudié (sable ou vase) et du lieu étudié (mer, rivière...). A titre d'exemple, dans la mer, les prélèvements sont effectués moins loin du point d'introduction que dans une rivière.

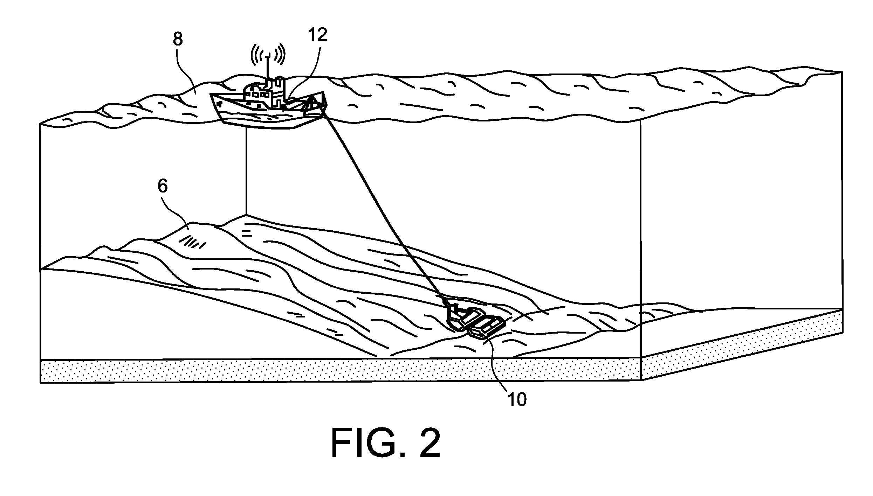

La figure 2 illustre schématiquement un prélèvement d'échantillons en milieu aquatique, que l'on peut mettre en oeuvre dans la présente invention.

On voit sur cette figure 2 un milieu 6 surmonté d'eau (référence 8). Les échantillons sont prélevés dans le milieu 6 (fond de l'eau) par l'intermédiaire d'un dispositif approprié 10 qui est commandé à partir d'un bâteau 12.

A ce propos, on peut se reporter au document suivant :
(2) Fluvial sédiment transport : analytical techniques for measuring sédiment load, IAEA-TECDOC-1461, Juillet 2005, page 45.

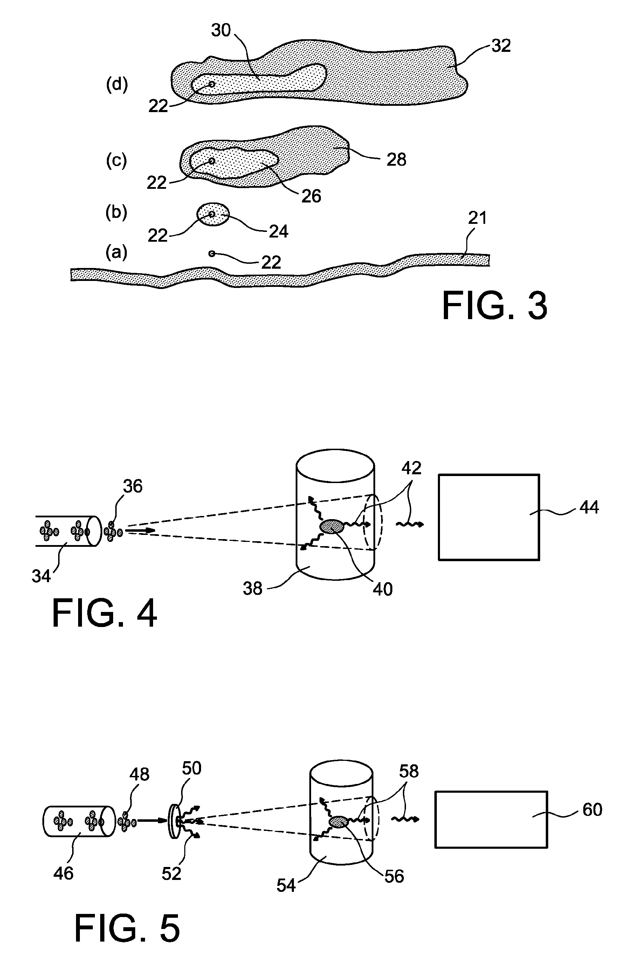

La figure 3 illustre schématiquement un exemple de mesure de dynamique sédimentaire en fonction du temps et de l'espace, au large d'une côte 21.

A l'instant initial (a), un traceur activable est injecté dans une zone sédimentaire 22. Un jour après (b), le traceur et les sédiments de la zone 22 occupent une zone 24 qui s'étend autour de la zone 22. Vingt jours après (c), le traceur occupe une zone plus vaste 26 tandis que les sédiments occupent une zone encore plus vaste 28. Cinquante jours après (d), le traceur et les sédiments occupent respectivement des zones 30 et 32 encore plus vastes.

Revenons maintenant sur les sédiments considérés, à savoir essentiellement les sables et les vases.

Le sable naturel est simulé par une matrice, ou liant, contenant l'élément dosable sous forme dispersée. La matrice, ou liant, peut être soit un verre soit un ciment soit une résine. L'élément activable constituant le traceur se présente alors sous la forme d'une poudre fine qui est mélangée à la matrice, ou liant, de manière à produire une pâte de teneur homogène.

Les différents constituants de cette pâte sont ajustés de manière à obtenir, après pulvérisation de la pâte, une poudre ayant une densité de 2,65 qui correspond généralement à celle du sable naturel. Mais d'autres densités peuvent être choisies suivant les cas étudiés. La granulométrie de la poudre obtenue est ajustée, généralement par tamisage, à la granulométrie du sédiment, c'est-à-dire du sable, qui est présent dans le site.

Les vases sont, quant à elles, des sédiments pélitiques, formés d'un mélange d'argiles et de matières organiques. Elles ont de ce fait des propriétés physico-chimiques particulières (notamment la floculation en milieu ionique) et ne peuvent pas être simulées par des matériaux synthétiques. Il est donc préférable de marquer chimiquement les particules naturelles de la vase étudiée pour obtenir un bon traceur.

L'élément traceur, qui est initialement en solution aqueuse, généralement en milieu chlorhydrique, est mis en contact avec ces particules naturelles. Une réaction chimique a lieu (par exemple, une oxydoréduction ou une adsorption) et l'élément traceur se fixe sur les particules de manière indélébile dans les conditions physico-chimiques naturelles.

Considérons maintenant le traceur. En principe, dans la présente invention, n'importe quel élément chimique est utilisable en tant que traceur.

Ce dernier doit cependant être choisi, après analyse des éléments présents naturellement à l'état de traces sur le site, soit comme élément non présent naturellement en quantité détectable, soit comme élément présent en quantité suffisamment faible pour que, après introduction, sa contribution dans l'échantillon puisse ressortir suffisamment du bruit de fond naturel.

A titre purement indicatif et nullement limitatif, l'iridium est souvent utilisable, plus particulièrement dans le cas d'une activation neutronique. Mais il s'agit d'un métal coûteux.

Dans le cas d'une photo-activation, on utilise de préférence le zirconium ou le cobalt.

Considérons maintenant les méthodes de dosage utilisables dans l'invention et tout d'abord le traitement des échantillons prélevés, qui intervient avant le dosage proprement dit.

Très généralement, un traitement simple est suffisant : on effectue un séchage dans une étuve puis un tamisage, afin d'éliminer les particules indésirables (par exemple des coquilles et/ou des particules ayant des tailles différentes de celle du traceur). Ceci est particulièrement vrai dans le cas des sables.

Dans certains cas, il est nécessaire de recourir à une pré-concentration par voie chimique. Ceci s'applique essentiellement au cas des vases. La méthode consiste alors à minéraliser tout ou partie de l'échantillon, puis à extraire par voie chimique l'élément traceur initialement fixé sur les particules.

Les méthodes de minéralisation et d'extraction dépendent essentiellement de l'élément traceur choisi.

Donnons maintenant des précisions sur l'analyse par activation neutronique.

L'analyse par l'activation neutronique a été développée la première, en particulier parce qu'elle peut employer les neutrons thermiques des réacteurs nucléaires. Le flux thermique de tels neutrons peut atteindre 10¹³ à 10¹⁵ n.cm⁻².s⁻¹, ce qui permet une sensibilité intrinsèque élevée ; des limites de détection de concentrations de l'ordre du ppb (10⁻⁹ gramme/g) sont habituelles.

Pour diminuer le seuil de détection, on enlève la matrice dans laquelle on a incorporé l'élément traceur activable, ce qui concentre l'échantillon en traceur activable.

Cependant, lorsque l'on effectue une analyse par activation neutronique dans unréacteur nucléaire, la taille de l'échantillon est souvent limitée : la masse de cet échantillon est typiquement égale à 100 mg. Cela constitue un inconvénient pour analyser de petites concentrations et pose un problème de représentativité de l'échantillon, en particulier dans le cas des sables où le nombre de grains dans l'échantillon est limité. En outre, un réacteur nucléaire est un outil extrêmement cher.

Certes, des sources d'isotopes radioactifs sont fréquemment employées mais le flux de neutrons obtenu est très inférieur au flux qui est fourni par un réacteur nucléaire.

Du fait des inconvénients cités, le procédé d'analyse conforme à l'invention n'utilise pas l'activation neutronique dans unréacteur nucléaire, ni l'activation neutronique créée par une source radioactive.

Récemment, des générateurs de D-T-neutrons ont été développés ; ils sont capables de produire des flux de neutrons de 14 MeV de l'ordre de 10⁸ à 10⁹ n.s⁻¹ dans un angle solide de 4π stéradians et sont bien adaptés à une analyse par activation par neutrons rapides.

Le principe de l'activation neutronique est schématiquement illustré par la figure 4. On utilise un générateur 34 de T-D neutrons pour envoyer les neutrons 36 ainsi engendrés vers un échantillon 38 contenant un traceur activable 40. Ce dernier émet des photons γ par interaction avec les neutrons. Ces photons γ (référence 42) sont analysés au moyen d'un spectromètre gamma 44.

Considérons maintenant la PAA, c'est-à-dire l'analyse par photo-activation (en anglais, *photon activation analysis).* Pendant longtemps, les seuils d'énergie des réactions photonucléaires ont constitué une limitation du développement de ce type d'analyse.

Cependant, lorsque l'on a disposé d'accélérateurs d'électrons cycliques ou continus de grande énergie, tels que les bétatrons, les linacs, les microtrons et les rhodotrons, on a employé le rayonnement de freinage (en anglais, *bremsstrahlung)* de grande énergie produit par ces machines pour l'analyse par photo-activation. En conséquence, la liste d'éléments déterminables s'est accrue considérablement.

Un autre avantage de la PAA est que les photons peuvent pénétrer plus profondément que les neutrons dans un milieu, de sorte que de grands échantillons peuvent être irradiés.

L'intérêt de cette méthode, dans le cas de la dynamique sédimentaire, est de pouvoir activer des échantillons de masse importante, typiquement de 1kg à 10 kg). De plus, les installations permettant la mise en oeuvre de cette méthode sont beaucoup plus légères qu'un réacteur nucléaire.

Le principe de l'activation photonique est schématiquement illustré par la figure 5. On utilise un accélérateur 46 d'électrons pour envoyer les électrons 48 ainsi engendrés vers une cible de conversion 50. Cette dernière est prévue pour émettre des photons de sondage 52, dont l'énergie est supérieure à 6MeV, par interaction avec les électrons 48.

On envoie les photons 52 ainsi engendrés vers un échantillon 54 contenant un traceur activable 56. Ce dernier émet des photons γ par interaction avec les photons 52. Ces photons γ (référence 58) sont analysés au moyen d'un spectromètre gamma 60.

Considérons maintenant le dosage par une méthode physico-chimique.

Diverses méthodes de ce genre sont utilisables, notamment la spectrométrie de masse et en particulier la ICP-MS, c'est-à-dire la spectrométrie de masse quadripolaire à source plasma (en anglais, *inductively coupled plasma-mass spectrometry),* l'absorption atomique et les méthodes électro-chimiques telles que, par exemple, la voltampérométrie.

La méthode physico-chimique de dosage doit être choisie en fonction de la sensibilité requise (et du coût).

En outre, la plupart des méthodes physico-chimiques mentionnées ci-dessus nécessitent une préparation chimique préalable des échantillons. Cette préparation chimique consiste à minéraliser tout ou partie d'un échantillon étudié puis à extraire, par voie chimique, l'élément traceur qui était initialement fixé sur les particules de l'échantillon.

Considérons maintenant le dosage par une méthode physique.

Diverses méthodes de ce genre sont utilisables, notamment la fluorescence X et l'ablation laser.

Certes, la sensibilité de ces méthodes est inférieure à celles des méthodes physico-chimiques mais, par rapport à ces dernières, les méthodes physiques sont avantageuses en ce qu'elles ne nécessitent pas la préparation des échantillons et permettent d'analyser de plus grandes masses.

Mentionnons encore que le procédé de mesure de dynamique sédimentaire, objet de l'invention, s'applique, entre autres, au traçage de sédiments pour la mesure en milieu aquatique
- d'un transport sédimentaire,
- d'un dépôt ou d'un mouvement de sédiments,
- d'un transport par charriage,
- de rejet de produits de dragage.

Ce procédé s'applique aussi au contrôle
- de constructions en milieu aquatique,
- d'installations portuaires,
- de chenaux de navigation,
- de rénovation de plages, et
- de remblais en mer.

## Revendications

1. Procédé de mesure de la dynamique sédimentaire dans un site (S) constituant un milieu aquatique, ce milieu aquatique contenant au moins un sédiment, ce procédé étant **caractérisé en ce qu'**il comprend les étapes suivantes :
- on prépare une matrice représentative des sédiments à étudier dans laquelle on introduit un traceur artificiel activable (2),
- on introduit cette matrice représentative contenant le traceur artificiel activable (2) dans le milieu aquatique,
- on prélève au moins un échantillon (4) de ce milieu aquatique, dans au moins un emplacement (P) éloigné de celui (I) en lequel on a introduit le traceur artificiel activable, à au moins un instant,
- on effectue un dosage de la teneur en ce traceur artificiel activable dans l'étantillon prélevé (4), par une méthode choisie parmi l'analyse par spectrométrie gamma de l'activité induite par activation neutronique ou par photo-activation et les méthodes physico-chimiques ou physiques de dosage,
- on déduit du dosage la concentration en traceur de l'échantillon analysé, et
- on déduit de l'ensemble des échantillons prélevés en fonction du temps et de l'espace au moins un paramètre de transfert du sédiment.

2. Procédé selon la revendication 1, dans lequel le sédiment est un sable, on simule ce sable par une matrice, ou liant, à base de verre, de ciment, ou de résine, dont la granulométrie et la densité sont équivalentes à celle du sable, on mélange le traceur artificiel activable sous forme de poudre à cette matrice, ou liant, et l'on introduit le mélange ainsi obtenu dans le milieu aquatique.

3. Procédé selon la revendication 1, dans lequel le sédiment est une vase et l'on marque chimiquement cette vase par réaction chimique avec une solution contenant le traceur artificiel activable, pour introduire une matrice comprenant la vase marquée chimiquement par le traceur dans le milieu aquatique.

4. Procédé selon l'une quelconque des revendications 1 à 3, dans lequel on sèche puis on tamise l'échantillon prélevé (4) avant d'effectuer le dosage.

5. Procédé selon l'une quelconque des revendications 1 à 4, dans lequel, avant le dosage de l'échantillon, on concentre cet échantillon par élimination d'une matrice dans laquelle on a incorporé le traceur activable.

6. Procédé selon l'une quelconque des revendications 1 à 3, dans lequel on extrait le traceur artificiel activable de l'échantillon prélevé (4) avant d'effectuer le dosage.

7. Procédé selon l'une quelconque des revendications 1 à 6, dans lequel les méthodes physico-chimiques de dosage sont choisies parmi la spectrométrie de masse, l'absorption atomique et les méthodes électro-chimiques.

8. Procédé selon l'une quelconque des revendications 1 à 6, dans lequel le traceur artificiel activable est choisi, après analyse des éléments présents naturellement à l'état de traces sur le site, soit comme élément non présent naturellement en quantité détectable, soit comme élément présent en quantité suffisamment faible pour que, après introduction, sa contribution dans l'échantillon puisse ressortir suffisamment du bruit de fond naturel.

9. Procédé selon l'une quelconque des revendications 1 à 6, dans lequel le traceur activable est l'iridium pour une activation neutronique par un générateur de neutrons D-T.

10. Procédé selon l'une quelconque des revendications 1 à 6, dans lequel le traceur activable est choisi parmi le zirconium et le cobalt pour une photo-activation.

11. Procédé selon l'une quelconque des revendications 1 à 6, dans lequel les méthodes physiques de dosage sont choisies parmi la fluorescence X et l'ablation laser.

12. Procédé de traçage de sédiments pour la mesure en milieu aquatique d'un transport sédimentaire d'un dépôt ou d'un mouvement de sédiments, d'un transport par charriage, ou de rejets de produits de dragage, dans lequel on mesure la dynamique sédimentaire par le procédé selon l'une quelconque des revendications 1 à 11.

13. Procédé de contrôle de constructions en milieu aquatique, d'installations portuaires, de chenaux de navigation, de rénovation de plages, ou de remblais en mer, dans lequel on mesure la dynamique sédimentaire par le procédé selon l'une quelconque des revendications 1 à 11.
